Europäisches Patentamt

(19) European Patent Office

Office européen des brevets

(11) Publication number: **0 137 546**
**B1**

(12) EUROPEAN PATENT SPECIFICATION

(45) Date of publication of patent specification: **25.11.87**

(51) Int. Cl.⁴: **C 08 L 71/04** // (C08L71/04, 53:02, 63:00)

(21) Application number: **84201299.9**

(22) Date of filing: **10.09.84**

(54) **Polyphenylene ether composition containing an epoxy compound.**

(30) Priority: **12.10.83 NL 8303494**

(43) Date of publication of application:
**17.04.85 Bulletin 85/16**

(45) Publication of the grant of the patent:
**25.11.87 Bulletin 87/48**

(84) Designated Contracting States:
**DE FR GB IT NL**

(56) References cited:
**GB-A-1 561 140**
**US-A-3 763 088**

(73) Proprietor: **GENERAL ELECTRIC COMPANY**
**1 River Road**
**Schenectady New York 12305 (US)**

(72) Inventor: **van der Meer, Roelof**
**General Electric Plastics B.V. P.O. Box 117**
**NL-4600 AC Bergen op Zoom (NL)**

(74) Representative: **Grever, Frederik**
**General Electric Plastics B.V. P.O. Box 117**
**NL-4600 AC Bergen op Zoom (NL)**

Courier Press, Leamington Spa, England.

## Description

This invention relates to a polymer mixture of a polyphenylene ether and optionally a polystyrene or a rubber-modified polystyrene.

Polymer mixtures of polyphenylene ether and optionally a polystyrene or a rubber-modified polystyrene are known per se. For this purpose reference may be made, for example, to US—A—3,383,435.

Articles may be manufactured from these polymer mixtures by means of techniques which are usual for synthetic resins, for example, injection moulding. These articles may be used as semi-manufactured products or as final products. In both cases it may be desired to provide the formed articles with a layer of lacquer based, for example, on a polyurethane or an alkyd/melamine system. It may also occur, notably in semi-manufactured products, that the formed articles are to be bonded to another article by means of a layer of adhesive, for example, a poly-urethane or an epoxy adhesive.

The bonding of articles formed from polymer mixtures of a polyphenylene ether and optionally a rubber-modified or non-rubber modified polystyrene to lacquer layers or adhesive layers, however, is not sufficient for some applications.

The invention provides new polymer mixtures which, since certain additives are incorporated therein, show a better bonding for the articles formed therefrom to lacquer layers and adhesive layers; in particular for lacquer layers and adhesive layers of a polyurethane, an alkyd/melamine lacquer or an epoxy adhesive.

The polymer mixture according to the invention is characterized in that it comprises an epoxy compound and a saturated or unsaturated block copolymer having blocks derived from a conjugated diene and from a vinyl aromatic compound.

In the polymer mixture according to the invention the epoxy compound is used in a quantity of 0.2 to 7.5% by weight of the total composition. The block copolymer is present in a quantity of 1 to 25% by weight of the total composition.

The addition of an epoxy compound and a saturated or unsaturated block copolymer to the known polymer mixtures of polyphenylene ether results in a polymer mixture from which articles can be manufactured which have a good bonding with respect to lacquer layers and adhesive layers.

Polymer mixtures which show a good bonding to polyurethane foam are known from DE—A—30 39 201. These known polymer mixtures consist of a polyphenylene ether and a special impact-proof modified polystyrene as described in DE—A—25 25 019.

Articles manufactured from a polyphenylene ether and having a lacquer layer of a polyurethane are known from GB—A—1 539 380.

Chemical Abstracts, vol. 81, no. 20, Nov. 18, 1974, number 1220664 describes a composition containing a poly(phenylene oxide), an EPDM rubber and an expoxy resin which may be adhered to a copper foil by heating and pressing it thereon.

The polymer mixtures according to the invention comprise the following constituents:

A. a polyphenylene ether;
B. an epoxy compound;
C. a saturated or unsaturated block copolymer.

They may comprise in addition:

D. a polystyrene or a rubber-modified polystyrene;
E. usual additives for polymer mixtures on the basis of a polyphenylene ether.

A. Polyphenylene ether.

Polyphenylene ethers and their preparation are described in numerous patent publications, for example, in US—A—3,306,874; US—A—3,306,875; US—A—3,257,357 and US—A—3,257,358. The polymer mixture according to the invention may comprise one or more of all the known polyphenylene ethers, notable also homopolymers, copolymers and graft copolymers. The polyphenylene ether in the polymer mixtures according to the invention preferably comprise units derived from 2,6-dimethylphenol.

B. Epoxy compound.

The following compounds may be used as an epoxy compound:
(1) Epoxide resins which are prepared by condensing phenols having two or more OH-groups with epichlorohydrin in various ratios.
(2) Epoxide resins which are prepared by condensing alcohols having two or more OH-groups (= poly alcohols) with epichlorohydrin.
(3) Glycidyl ethers derived from phenols or alcohols having one OH-group.
(4) Glycidyl ethers derived from amine compounds.
(5) Epoxidized higher olefins or cycloalkanes.

Typical examples of epoxide resins mentioned in B.(1) are the condensation products of bisphenol A or bisphenol F with epichlorohydrin (for example, Araldit GT 7071, Araldit GY 266 and Araldit GT 6099 of Ciba Geigy), condensation products of resorcinol and epichlorohydrin, condensates of tetrabromobisphenol A and epichlorohydrin and the glycidyl ether products of phenol Novolak or kresol Novolak, for example Ciba EPN 138 of Ciba Geigy. Condensates of phenols having two OH-groups and epichlorohydrin having a

2

reasonably high molecular weight, for example the phenoxy resins produced by Union Carbide Corp., may also be used.

As examples of the epoxide resins mentioned in B.(2) may be stated the condensates of ethylene glycol, propylene gylcol, butylene glycol, polyethylene glycol, glycerin, trimethylol ethane, trimethylol propane, or pentaerythritol with epichlorohydrin.

As examples of the glycidyl ether products B.(3) may be mentioned phenyl glycidyl ether, n-butyl glycidyl ether, cresyl glycidyl ether, and 2-ethylhexyl glycidyl ether.

As an example for B.(4) is mentioned a diglycidyl ether derived from aniline.

As an example of the compounds mentioned in B.(5) may be stated epoxidized unsaturated oils, for example, soya bean oil and linseed oil (Edenol D 81 and Edenol B 316, respectively, of Henkel).

Due to the small plasticizing effect in polymer mixtures comprising a polyphenylene ether, epoxy resins having a molecular weight or more than 1,000 are preferably used.

C. Saturated or unsaturated block copolymer.

Block copolymers which may be used in the polymer mixtures: block copolymers of the type A—B, A—B—A' or also radical teleblock copolymers and so-called tapered block copolymers, i.e. block copolymers in which copolymers of the conjugated diene and the vinyl aromatic compound are present between the blocks. The block built up from the conjugated diene in all the types of block copolymers considered here may be fully or partly hydrogenated, in which case block copolymers are obtained. In the block copolymers A—B and A—B—A', B consists of a block of a conjugated diene, for example, butadiene, isoprene or pentadiene-1,3, and blocks A and A' consist of vinyl aromates, for example, styrene, alphamethylstyrene, vinyl toluene, vinyl xylene and/or vinyl naphtalene. B preferably consists of polybutadiene and A and A' preferably consist of polystyrene. Radial teleblock copolymers are to be understood to mean branched polymers having blocks which are formed by a polymer of a conjugated diene, preferably butadiene, blocks of a vinyl aromatic compound, preferably styrene and a coupling agent. In this copolymer structure, various chains of the diene polymer, usually three or more, start from a coupling agent in which each chain at its other end comprises a block of the aromatic vinylpolymer. All the said block copolymers are known per se.

D. Polystyrene or rubber-modified polystyrene.

As a polystyrene there may be used a compound which contains more than 25% of units of a compound of the formula $R—C(C_6H_{(5-p)}Z_p) = CH_2$, where R is a hydrogen atom, a lower alkyl group (having, for example, 1—6 carbon atoms) or a halogen atom, Z is a hydrogen atom or a chlorine atom or a lower alkyl group or a vinyl group and p = 0 or an integer from 1 to 5. Suitable polystyrene compounds and suitable rubber-modified polystyrene compounds (high-impact polystyrene) are homopolymers, for example, polystyrene itself, polychlorostyrene and poly-alpha-methyl styrene, rubber-modified polystyrenes, for example, the commercially available high-impact polystyrene polymers and also the styrene-containing copolymers, for example, styrene acrylonitrile copolymers, styrene butadiene copolymers, styrene acrylonitrile-butadiene terpolymers, copolymers of ethylvinylbenzene and divinylbenzene and the like.

When the polymer mixture includes a polystyrene or a rubber-modified polystyrene, the ratio between the quantity by weight of polyphenylene ether and polystyrene may be varied within wide limits, for example, between 1:4 and 20:1.

E. Usual additives for polymer mixture of polyphenylene ether.

Examples of usual additives are dyes and pigments, agents to make the polymer mixture antistatic, agents to give the polymer mixture better flame-retarding properties, stabilizers, fillers, reinforcing fibres and mineral oil.

From the polymer mixtures according to the invention articles may be manufactured according to techniques which are usual for processing synthetic resins, for example, by injection moulding, extrusion and the like. Lacquer layers or adhesive layers of a polyurethane may be provided on the articles. Lacquers of an alkyd/melamine system or epoxy adhesives may also be provided.

Polyurethane lacquers or adhesives are to be understood to mean lacquers or adhesives which comprise urethane groups in the ultimate protective layer or in the ultimately formed compound. Urethane groups are formed by the reaction of an active hydrogen atom of a hydroxyl group with an isocyanate group.

In most cases a polyurethane lacquer or adhesive consists of two components which are mixed with each other immediately before use. The two components are usually a prepolymer with isocyanate end groups and a resin with reactive OH-groups. In Verfkroniek, *43* (1970), p. 269—276 are mentioned as examples of suitable reactive resins:

a. polyacrylate-polyol
b. polyester-polyol
c. polyether-polyol

The OH-value of the lacquer or adhesive determines the ultimate degree of cross-linking of the lacquer or adhesive. The lacquer or adhesive usually comprises one or more of the following solvents: ethyl acetate, butyl acetate, toluene and xylene.

Alkyd/melamine lacquers are baking enamels. By raising the temperature (baking), curing takes place. The two components, on the one hand the alkyd resin with free carboxyl groups and on the other hand the melamine resin with free OH-groups, are supplied as one system.

Suitable expoxy adhesives are two-components systems which are mixed immediately before use. The main component is an epoxy resin having a given expoxy equivalent number, while the second component, "the hardener", ensures curing by reaction with the epoxy group.

In the examples hereinafter, thin, disk-shaped plates are formed by injection moulding from the polymer mixtures mentioned therein. Lacquer layers and/or adhesive layers on the basis of a polyurethane are provided on said plates. The bonding between the polyurethane lacquer layer — if not otherwise stated — is determined according to the so-called "Gitterschnittprüfung von Anstrichen und ähnlichen Beschichtungen" (cross-cut test on paint coatings and similar coatings) according to DIN 53 151. The tests have been carried out with an Ericsen type 295 testing apparatus. By means of said testing apparatus, a pattern of squares is scratched in the coating layer. An adhesive tape is adhered across said pattern; the tape is thoroughly pressed on. The adhesive tape is then pulled off. The appearance of the square pattern is then evaluated visually. With an evaluation Gt0 the coating layer is still fully intact. With an evaluation Gt5 more than 65% of the surface of the diamond pattern has worked loose. With intermediate evaluations Gt1, Gt2, Gt3, Gt4 a result getting worse and worse in this sequence is obtained.

The bonding of the adhesive layer is determined as follows. A standardized tensile test bar is manufactured from the polymer mixtures by injection moulding. A PVC-foil is adhered to the tensile test bar by means of adhesive (example III). The adhesive is cured. The peel resistance is then determined (N/mm). The peel resistance is defined as the average force per length unit of the bonding line to further pull apart the two parts bonded together once the peeling has started. For this method of determining the peel resistance there may be referred to International Standard ISO 4578—1979 (E) and to DIN 53 282. In example IV the bonding of the ahesive is determined by adhering two tensile test bars together with an overlap of 1 cm. The force necessary to slide the tensile test bars parallel to each other is then measured as the peel resistance (N/mm²).

Example I

Polymer mixtures were prepared (samples A, B and C) having a composition as stated in Table I hereinafter. From these mixtures, thin disc-shaped plates were manufactured by injection moulding. The plates were lacquered under different conditions with three commercially available polyurethane lacquers by means of a spray gun. The bonding between the plates and the lacquer layer was determined after seven days according to the "Gitterschnittprüfung" (cross-cut test) (DIN 53151). The lacquer conditions and the results obtained are recorded in Tables II, III, IV, V and VI hereinafter. The tests were always carried out in quintuplicate.

TABLE I

| Sample | (composition parts by weight) | | |
|---|---|---|---|
|  | A | B | C |
| Poly(2,6-dimethyl-1,4-phenylene ether) | 44 | 40 | 53 |
| High-impact polystyrene | 56 | 51 | 38 |
| ZnO + ZnS | 0.3 | 0.3 | 0.3 |
| Organic phosphite | 0.7 | 0.7 | 0.7 |
| Block copolymer[1] | — | 6.5 | 6.5 |
| Epoxy compound[2] | — | 2.5 | 2.5 |

[1] a block copolymer of the type A—B—A', wherein A and A' are polystyrene blocks and B is a non-hydrogenated polybutadiene block, obtainable under the trademark Cariflex TRKK—65

[2] an epoxy compound in the form of a solid epoxide resin on the basis of bisphenol A, obtainable under the trademark Araldit GT 7071.

4

# 0 137 546

## TABLE II

Conditions upon spraying the polyurethane lacquer.

| | |
|---|---|
| — distance spray gun-substrate | 0.3 m |
| — pressure in spray gun | 0.3 megapascal (MPa) |
| — temperature substrate | 30°C |
| — curing lacquer | 30 minutes at 80°C |

*Results:*

| Sample | Lacquer I[3] | Lacquer II[4] |
|---|---|---|
| A | 1 × GT4; 4 × Gt0 | 5 × Gt0 |
| B | 5 × Gt0 | 5 × Gt0 |
| C | 5 × Gt0 | 5 × Gt0 |

3) and 4) see note below Table VI

## TABLE III
Conditions upon spraying the polyurethane lacquer

| | |
|---|---|
| — distance spray gun-substrate | 0.6 m |
| — pressure in spray gun | 0.4 megapascal (MPa) |
| — temperature substrate | 30°C |
| — curing lacquer | 30 minutes at 80°C |

*Results:*

| Sample | Lacquer I[3] | Lacquer II[4] |
|---|---|---|
| A | 5 × Gt4 | 1 × GT2; 4 × Gt0 |
| B | 5 × Gt0 | 5 × Gt0 |
| C | 5 × Gt0 | 5 × Gt0 |

3) and 4) note below Table VI

5

**0 137 546**

## TABLE IV

### Conditions upon spraying the polyurethane lacquer

| | |
|---|---|
| — distance spray gun-substrate | 0.6 m |
| — pressure in spray gun | 0.4 megapascal (MPa) |
| — temperature substrate | 20°C |
| — curing lacquer | 30 minutes at 80°C |

*Results:*

| Sample | Lacquer I[3] | Lacquer II[4] |
|---|---|---|
| A | 5 × Gt4 | 4 × Gt2 |
| B⁻ | 5 × Gt4 | 5 × Gt0 |
| C | 5 × Gt4 | 5 × Gt0 |

3) and 4) see note below Table VI

## TABLE V

### Conditions upon spraying the polyurethane lacquer

As in Example IV, with the exception of:

| | |
|---|---|
| — curing laquer | 30 minutes at 120°C |

*Results:*

| Sample | Lacquer I[3] |
|---|---|
| A | 5 × Gt0 |
| B | 5 × Gt0 |
| C | 5 × Gt0 |

3) and 4) see note below Table VI

## TABLE VI

Conditions upon spraying the polyurethane lacquer

| | |
|---|---|
| — distance spray grun-substrate | 0.6 m |
| — pressure in spray gun | 0.6 megapsacal (MPa) |
| — temperature substrate | 35°C |
| — curing lacquer | 30 minutes at 80°C |

*Results:*

| Sample | Lacquer I[3] | Lacquer II[4] |
|---|---|---|
| A | 5 × Gt4 | 4 × Gt2/3; 1 × Gt0 |
| B | 5 × Gt4 | 5 × Gt0 |
| C | 5 × Gt4 | 5 × Gt0 |

3. Lacquer I is a two components polyacrylate-polyol/isocyanate having an OH-value of 4%, commercially available as "Autocryl" from Messrs. Sikkens.
4. Lacquer II is a two components polyacrylate-polyol/isocyanate lacquer having an OH-value of 4%, commercially available as "Cellioster 1834" from Messrs. La Celliose.

It appears from the Tables that the conditions upon spraying the lacquers are of importance for the resulting bonding. In practice, however, it is of essential importance that a good bonding should also be obtained in less optimum conditions.

It appears from the Tables that with the samples B and C according to the invention a better or equal result is obtained as with sample A (reference sample).

## Example II

Two polymer mixtures were prepared corresponding to samples A and B of Table I. Disk-shaped plates were manufactured from the polymer mixture by means of injection moulding. The plates were lacquered with a polyurethane lacquer under different conditions. As a polyurethane lacquer was used a two-components polyacrylatepolyol/isocyanate lacquer obtainable as "Cellioster 2400 Alu Nacre 3387 HU" from La Celliose.

All experiments were carried out in quintuplicate. The bonding strength was determined according to the "Gitterschnitt" test. Moreover the impact strength prior to and after painting was determined according to the so-called "falling dart impact" test (thickness disk 3.2 mm; falling height 2.15 m; mass 10.378 kg). The results are recorded in Table VII.

7

TABLE VII

| | Sample A | Sample B |
|---|---|---|
| Properties before painting "Falling dart impact strength" (J) | 60 | 95 |
| Conditions used upon spraying the polyurethane lacquer | "Gitterschnitt" value | "Gitterschnitt" value cross-cut |
| I distance spray gun-substrate 0.3 m; pressure in spray gun 0.3 megapascal; temperature surface 20°C; curing lacquer 30 min. at 80°C | 5 × Gt0 | 5 × Gt0 |
| II distance spray gun-substrate 0.6m; pressure in spray gun 0.6 megapascal; temperature surface at 20°C; curing lacquer 30 min. at 80°C | 1 × Gt0<br>3 × Gt2<br>1 × Gt4 | 5 × Gt0 |
| III distance spray gun-substrate 0.6 m; pressure in spray gun 0.6 megapascal; temperature surface 35°C; curing lacquer 30 min. at 80°C | 5 × Gt4 | 5 × Gt0 |
| Properties after painting according to II. "Falling dart impact strength" (J) | 10 | 50 |

It may be seen from Table VII that sample B according to the invention shows a better or equal bonding with polyurethane lacquer than sample A (reference sample).

Example III

Three polymer mixtures were manufactured with the composition as stated hereinafter in Table VIII.

TABLE VIII

| Sample | (Compositions in parts by weight) | | |
|---|---|---|---|
| | D | E | F |
| poly(2,6-dimethyl-1,4-phenylene ether) | 32 | 32 | 32 |
| high-impact polystyrene | 64 | 64 | 64 |
| ZnO + ZnS | 0.3 | 0.3 | 0.3 |
| organic phosphite | 0.9 | 0.9 | 0.9 |
| block copolymer[1] | 5 | 5 | 5 |
| epoxy compound[2] | — | 3 | 6 |

1) and 2): In this example the same blockcopolymer and the same epoxy compound were used as indicated in Example I, Table I.

Standardized rods for a tensile test were manufactured from the resulting polymer mixtures by injection moulding. A PVC foil was adhered to the rods by means of a polyurethane adhesive, namely a two-components polyurethane adhesive of the tradename "Hernerts 7550". The glued joint was heated at 80°C for 5 minutes. After 5 days the peel resistance was determined. The results are recorded in Table IX hereinafter.

8

## 0 137 546

### TABLE IX

| Sample | D | E | F |
|---|---|---|---|
| Average peel resistance (three measurements) | 2.8 ± 0.05[a] | 3.6 ± 0.1[a] | 3.7 ± 0.1[a] |

[a] Standard deviation.

### EXAMPLE IV

A large number of tensile test bars were formed (injection moulded) from each of the polymer mixtures according to samples, A, B and C of Example I. Always two rods from the same polymer mixture were bonded together with an overlap of 1 cm by means of a polyurethane adhesive or an epoxy adhesive. The adhesive was cured, partly at 20°C and partly at 80°C (60 minutes) and partly at 120°C (60 minutes). Two different polyurethane adhesives and one epoxy adhesive were used. Seven days after adhering the peel resistance was determined. Each test was repeated four times. The results obtained are recorded in Table X hereinafter.

### TABLE X

| | Peel resistance ($N/mm^2$) after curing at | | |
|---|---|---|---|
| Sample A | 20°C | 80°C | 120°C |
| Adhesive I[5] | 3;3;3;3 | 7;7;4;4; | — |
| Adhesive II[6] | 1;<1;<1;<1 | 3;2;1;1; | 6;6;5;4 |
| Adhesive III[7] | 2;2;2;1; | 2;2;<1;<1 | — |
| Sample B | | | |
| Adhesive I[5] | 4;3;3;2 | 7;9;3;3; | — |
| Adhesive II[6] | 3;2;2;2 | 4;3;3;3 | 4 × 10 |
| Adhesive III[7] | 3;3;3;2 | 8;8;8;5 | — |
| Sample C | | | |
| Adhesive I[5] | 6;5;4;4; | >10;10;9;4; | — |
| Adhesive II[6] | 3;3;2;2; | 6;4;4;3 | 4 × >10 |
| Adhesive III[7] | 3;3;2;2; | 4;4;4;2 | — |

[5] A two-components polyurethane adhesive commercially available under the trademark Bison from Perfekta.

[6] A two-components polyurethane adhesive commerically available under the trademark Macroplast UK 8210 from Henkel.

[7] A two-components epoxy adhesive commerically available under the indication "XB—7838 B/A from 3 M Company.

It may be seen from the Table that the samples B and C according to the invention provide a better or equal peel resistance as compared with Sample A (not according to the invention).

9

# 0 137 546

EXAMPLE V

Polymer mixtures (samples G, H, J and K) were prepared in a composition as indicated in Table XI hereinafter. Injection moulding, lacquering and determination of bonding were carried out as stated in Example I. The results obtained are recorded in Table XII.

## TABLE XI

| Sample | (Composition in parts by weight) | | | |
|---|---|---|---|---|
| | G | H | J | K |
| Poly (2,6-dimethyl-1,4-phenylene ether) | 44 | 44 | 44 | 44 |
| High-impact polystrene | 56 | 56 | 56 | 56 |
| ZnO + ZnS | 0.3 | 0.3 | 0.3 | 0.3 |
| Organic phosphite | 0.8 | 0.8 | 0.8 | 0.8 |
| Block copolymer[1] | — | — | 6.5 | 6.5 |
| Expoxy compound[2] | — | 2.5 | — | 2.5 |

[1] and [2] see Table I.

## TABLE XII

| Sample | "Gitterschnitt" value | | | |
|---|---|---|---|---|
| | G | H | J | K |
| I Distance spray gun-substrate 0.45 m; pressure in spray gun = 0.6 MPa; temperature substrate = 35°C curing lacquer 75 minutes at 80°C | 4 × Gt0 | 4 × Gt0 | 4 × Gt4 | 4 × Gt0 |
| II Distance spray gun-substrate 0.6 m; pressure in spray gun = 0.6 Mpa; temperature substrate = 20°C; curing 30 minutes at 120°C | 2 × Gt4 | 2 × Gt0 | 2 × Gt0 | 2 × Gt0 |
| III Distance gun-substrate 0.6 m; pressure in spray gun = 0.6 MPa; temperature substrate = 20°C; curing lacquer 30 minutes at 80°C | 3 × Gt4 | 2 × Gt4 / 1 × Gt0 | 1 × Gt4 / 2 × Gt0 | 1 × Gt4 / 2 × Gt0 |

It appears from Table XII that under critical lacquer conditions the sample with the block copolymer shows a better or equal bonding than the reference sample, while the sample with only the epoxide compound shows a better bonding, and the sample with both the block copolymer and the epoxide compound shows the best bonding.

## EXAMPLE VI

Polymer mixtures were prepared having a composition as of sample A to which, however, 2.5 parts by weight of various epoxy compounds are added (Table XIII). The samples L, M, N and P were obtained in this manner (Table XIII). Injection moulding, lacquering and bonding determination were carried out as stated in Example I. The bonding found is recorded in Table XIV.

### TABLE XIII

|  | (Composition parts by weight) | | | | |
| Sample | A | L | M | N | P |
| --- | --- | --- | --- | --- | --- |
| Expoxy compound: | | | | | |
| Edenol B 35[8] | — | 2.5 | — | — | — |
| Edenol D 81[9] | — | — | 2.5 | — | — |
| Edenol B 316[10] | — | — | — | 2.5 | — |
| ERL 4221[11] | — | — | — | — | 2.5 |

[8] Edenol B 35 is an isoalkyl expoxystearate of Henkel
[9] Edenol D 81 is an epoxidized soya bean oil of Henkel
[10] Edenol B 316 is an epoxidized linseed oil of Henkel
[11] ERL 4221 is 3,4-epoxycyclohexylmethyl-3,4-expoxycyclohexyl carboxylate and is marketed by Union Carbide Corporation under the tradename Bakelite Cycloaliphatic Epoxy Resin ERL 4221

### TABLE XIV

|  | "Gitterschnitt" value | | | | |
| Sample | A | L | M | N | P |
| --- | --- | --- | --- | --- | --- |
| I Distance spray gun-substrate = 0.6 m; pressure in spray gun = 0.6 MPa; temperature substrate = 35°C; curing lacquer 30 minutes at 80°C | 3 × Gt4 | 3 × Gt0 | 3 × Gt0 | 3 × Gt0 | 3 × Gt0 |
| II Distance spray gun-substrate = 0.6 m; pressure in spray gun = 0.6 MPa; temperature substrate = 35°C; curing lacquer 30 minutes at 120°C. | 3 × Gt4 | 2 × Gt0<br>1 × Gt2 | 3 × Gt0 | 2 × Gt0<br>1 × Gt2 | 3 × Gt0 |

11

**0 137 546**

EXAMPLE VII

Test plates were manufactured from polymer mixtures according to samples A and C of Example I. The samples were lacquered by spraying with two different alkyd/melamine lacquers. The conditions during lacquering and the found bonding results are recorded in Table XV hereinafter.

TABLE XV

| Sample | "Gitterschnitt" value | |
| --- | --- | --- |
| | A | C |
| Conditions during lacquering | | |
| — distance spray gun-substrate 0.3 m. | | |
| — pressure in spray gun 0.3 MPa | | |
| — temperature substrate 20°C | | |
| — curing lacquer 30 minutes at 80°C | | |
| Lacquer III[12] | 2 × Gt4; 1 × Gt0 | 3 × Gt0 |
| Lacquer IV[13] | 3 × Gt4 | 3 × Gt4 |
| Conditions during lacquering as above, but: | | |
| — curing lacquer 30 minutes at 120°C | | |
| Lacquer III[12] | 3 × Gt4 | 3 × Gt0 |
| Lacquer IV[13] | 3 × Gt4 | 2 × Gt4; 1 × Gt0 |
| Conditions during lacquering | | |
| — distance spray gun-substrate 0.6m | | |
| — pressure in spray gun 0.6 MPa | | |
| — temperature substrate 20°C | | |
| — curing 80°C | | |
| Lacquer-III[12] | 3 × Gt4 | 3 × Gt0 |
| Lacquer IV[13] | 3 × Gt4 | 3 × Gt4 |
| Conditions as above but: | | |
| — curing 120°C | | |
| Lacquer III[12] | 3 × Gt4 | 3 × Gt4 |
| Lacquer IV[13] | 3 × Gt4 | 3 × Gt4 |

[12] An alkyd/melamine paint having a rather high carboxyl value, obtainable under indication C3E577 from Schaepman Lakfabrieken.
[13] An alkyd/melamine paint (code C4E34) having a free inorganic acid (code H4E15) of Schaepman Lakfabrieken.

It may be seen from the results recorded in Table XV that a better or equal bonding is obtained with a polymer mixture according to the invention B than with a polymer mixture A (reference sample).

12

# 0 137 546

## Claims

1. A polymer mixture comprising:
   a) a polyphenylene ether resin;
   b) an epoxy compound; and
   c) a block copolymer having blocks derived from a conjugated diene and a vinylaromatic compound, wherein said epoxy compound is present in an amount of 0.2 to 7.5% by weight of the total composition and wherein said block copolymer is present in an amount of 1 to 25% by weight of the total composition.

2. A polymer mixture as in Claim 1, further comprising polystyrene or rubber-modified polystyrene and wherein the ratio of the polyphenylene ether to said polystyrene or rubber-modified polystyrene is between 1:4 and 20:1 by weight.

3. A polymer mixture as in Claim 1, wherein said block copolymer is saturated.

4. A polymer mixture as in Claim 1, wherein said block copolymer is unsaturated.

5. A polymer mixture as in Claim 1, wherein said block copolymer is comprised of units derived from butadiene and styrene.

6. A polymer mixture as in Claim 1, wherein said epoxy compound has a molecular weight greater than 1,000.

## Patentansprüche

1. Polymerisatmischung umfassend:
   a) ein Polyphenylenätherharz;
   b) eine Epoxyverbindung; und
   c) ein Blockcopolymerisat mit Blöcken, die abgeleitet sind von einem konjugierten Dien und einer vinylaromatischen Verbindung, worin die Epoxyverbindung in einer Menge von 0,2 bis 7,5 Gew.-%, bezogen auf die Gesamtzusammensetzung, und das Blockcopolymerisat in einer Menge von 1 bis 25 Gew.-%, bezogen auf die Gesamtzusammensetzung answesend sind.

2. Polymerisatmischung nach Anspruch 1, die weiterhin Polystyrol oder gummimodifiziertes Polystyrol umfaßt, und worin das Gewichtsverhältnis von Polyphenylenäther zu Polystyrol oder gummimodifiziertem Polystyrol zwischen 1:4 und 20:1 liegt.

3. Polymerisatmischung nach Anspruch 1, worin das Blockcopolymerisat gesättigt ist.

4. Polymerisatmischung nach Anspruch 1, worin das Blockcopolymerisat ungesättigt ist.

5. Polymerisatmischung nach Anspruch 1, worin das Blockcopolymerisat Einheiten umfaßt, die von Butadien und Styrol abgeleitet sind.

6. Polymerisatmischung nach Anspruch 1, worin die Expoxyverbindung ein Molekulargewicht aufweist, das größer als 1,000 ist.

## Revendications

1. Mélange de polymères comprenant:
   a) une résine de poly(oxyphénylène);
   b) un composé époxy; et
   c) un copolymère séquencé ayant de séquences dérivés d'un diène conjugué et d'un composé vinylaromatique, dans lequel le composé époxy est présent en une quantité de 0,2 à 7,5% en poids de la composition totale et dans lequel le copolymère séquencé est présent en une quantité de 1 à 25% en poids de la composition totale.

2. Mélange de polymères selon la revendication 1, comprenant en outre du polystyrène ou un polystyrène modifié au caoutchouc et dans lequel le rapport du poly(oxyphénylène) au polystyrène ou au polystyrène modifié au caoutchouc est compris entre 1:4 et 20:1 en poids.

3. Mélange de polymères selon la revendication 1, dans lequel le copolymère séquencé est saturé.

4. Mélange de polymères selon la revendication 1, dans lequel le copolymère séquencé est insaturé.

5. Mélange de polymères selon la revendication 1, dans lequel le copolymère séquencé est composé de motifs dérivés du butadiène et du styrène.

6. Mélange de polymères selon la revendication 1, dans lequel le composé époxy présente une masse molaire supérieure à 1000.

13